(19) Europäisches Patentamt
European Patent Office
Office européen des brevets

(11) **EP 4 280 643 A1**

(12) **EUROPEAN PATENT APPLICATION**
published in accordance with Art. 153(4) EPC

(43) Date of publication:
**22.11.2023 Bulletin 2023/47**

(21) Application number: **21919291.1**

(22) Date of filing: **13.01.2021**

(51) International Patent Classification (IPC):
**H04W 8/22** (2009.01)    **H04W 16/28** (2009.01)

(52) Cooperative Patent Classification (CPC):
**H04W 8/22; H04W 16/28**

(86) International application number:
**PCT/JP2021/000837**

(87) International publication number:
**WO 2022/153395 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **MATSUMURA, Yuki**
**Tokyo 100-6150 (JP)**
• **NAGATA, Satoshi**
**Tokyo 100-6150 (JP)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to an aspect of the present disclosure includes a transmitting section that transmits capability information indicating that transmission with the number of antenna ports more than four is supported, and a control section that controls uplink transmission using the number of layers more than four. According to an aspect of the present disclosure, UL transmission with the number of layers more than four can be appropriately controlled.

FIG. 1A

PORTS IN FRAME ARE COHERENT

PORT 1   PORT 2   PORT 3   PORT 4   PORT 5   PORT 6

EP 4 280 643 A1

FIG. 1B

PORTS ARE NONCOHERENT
BETWEEN FRAMES

PORTS IN FRAME
ARE COHERENT

PORT
1

PORT
2

PORT
3

PORT
4

PORT
5

PORT
6

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In Rel-15 NR, uplink (UL) Multi Input Multi Output (MIMO) transmission with up to four layers is supported. For NR in the future, in order to achieve higher spectrum efficiency, supporting UL transmission with the number of layers more than four is under study.

However, regarding the UL transmission with the number of layers more than four, the study is not yet progressed on how a network grasps an antenna configuration of a UE and how to cause the UE to perform the UL transmission. Unless control for such operation is clarified, an increase in the communication throughput may be suppressed.

In view of this, the present disclosure has one object to provide a terminal, a radio communication method, and a base station that enable appropriate control of UL transmission with the number of layers more than four.

Solution to Problem

A terminal according to an aspect of the present disclosure includes a transmitting section that transmits capability information indicating that transmission with the number of antenna ports more than four is supported, and a control section that controls uplink transmission using the number of layers more than four.

Advantageous Effects of Invention

According to an aspect of the present disclosure, UL transmission with the number of layers more than four can be appropriately controlled.

Brief Description of Drawings

[FIG. 1] FIGS. 1A and 1B are each a diagram to show an example of UE capability information related to antenna coherency according to a first embodiment.
[FIG. 2] FIGS. 2A to 2D are each a diagram to show an example of a table of antenna ports to be referenced in a case that a transform precoder is disabled, a DMRS type = 1, and a maximum length of DMRS = 2, in a fourth embodiment.

[FIG. 3] FIGS. 3A and 3B are each a diagram to show an example of a table of antenna ports to be referenced in a case that the transform precoder is disabled, the DMRS type = 2, and the maximum length of DMRS = 1, in the fourth embodiment.

[FIG. 4] FIGS. 4A to 4D are each a diagram to show an example of a table of antenna ports to be referenced in a case that the transform precoder is disabled, the DMRS type = 2, and the maximum length of DMRS = 2, in the fourth embodiment.

[FIG. 5] FIG. 5 is a diagram to show an example of a schematic structure of a radio communication system according to one embodiment.

[FIG. 6] FIG. 6 is a diagram to show an example of a structure of a base station according to one embodiment.

[FIG. 7] FIG. 7 is a diagram to show an example of a structure of a user terminal according to one embodiment.

[FIG. 8] FIG. 8 is a diagram to show an example of a hardware structure of the base station and the user terminal according to one embodiment.

Description of Embodiments

(Control of Transmission of SRS and PUSCH)

In Rel-15 NR, a UE may receive information (SRS configuration information, e.g., a parameter in "SRS-Config" in an RRC control element) to be used for transmission of a reference signal for measurement (e.g., sounding reference signal (SRS)).

Specifically, the UE may receive at least one of information (SRS resource set information, e.g., "SRS-ResourceSet" in the RRC control element) related to one or more SRS resource sets and information (SRS resource information, e.g., "SRS-Resource" in the RRC control element) related to one or more SRS resources.

One SRS resource set may be associated with a given number of SRS resources (the given number of SRS resources may be grouped together). Each SRS resource may be identified by an SRS resource indicator (SRI) or an SRS resource ID (identifier).

The SRS resource set information may include an SRS resource set ID (SRS-ResourceSetId), a list of SRS resource IDs (SRS-ResourceId) used in the resource set, an SRS resource type, and information about usage of the SRS.

Here, the SRS resource type may indicate any of periodic SRS (P-SRS), semi-persistent SRS (SP-SRS), aperiodic SRS (Aperiodic SRS (A-SRS)). Note that the UE may transmit the P-SRS and SP-SRS periodically (or periodically after activate), and transmit the A-SRS on the basis of an SRS request of DCI.

The usage ("usage" of an RRC parameter, "SRS-SetUse" of an L1 (Layer-1) parameter) may be, for example, beam management (beamManagement), codebook (CB), noncodebook (NCB), antenna switching, and the like. An SRS for codebook or noncodebook usage may be used for determining a precoder of codebook-based or non-codebook-based uplink shared channel (Physical Uplink Shared Channel (PUSCH)) transmission of based on an SRI.

For example, in a case of codebook-based transmission, the UE may determine the precoder for the PUSCH transmission on the basis of an SRI, a transmitted rank indicator (TRI), and a transmitted precoding matrix indicator (TPMI). In a case of non-codebook-based transmission, the UE may determine the precoder for the PUSCH transmission on the basis of the SRI.

The SRS resource information may include an SRS resource ID (SRS-ResourceId), the number of SRS ports, an SRS port number, transmission Comb, an SRS resource mapping (e.g., time and/or frequency resource location, resource offset, periodicity of resource, the number of repetitions, the number of SRS symbols, and SRS bandwidth), hopping-related information, an SRS resource type, a sequence ID, spatial relation information of SRS, and the like.

The spatial relation information of SRS (e.g., "spatialRelationInfo" of an RRC information element) may indicate spatial relation information between a given reference signal and the SRS. The given reference signal may be at least one of a synchronization signal/broadcast channel (Synchronization Signal/Physical Broadcast Channel (SS/PBCH)) block, a channel state information reference signal (CSI-RS), and an SRS (e.g., another SRS). The SS/PBCH block may be referred to as a synchronization signal block (SSB).

The spatial relation information of SRS may include at least one of an SSB index, a CSI-RS resource ID, and an SRS resource ID, as an index of the given reference signal.

Note that, in the present disclosure, an SSB index, an SSB resource ID, and an SSB Resource Indicator (SSBRI) may be interchangeably interpreted. A CSI-RS index, a CSI-RS resource ID, and a CSI-RS Resource Indicator (CRI) may be interchangeably interpreted. An SRS index, an SRS resource ID, and an SRI may be interchangeably interpreted.

The spatial relation information of SRS may include a serving cell index, a BWP index (BWP ID), and the like corresponding to the given reference signal.

In a case that, for a given SRS resource, spatial relation information related to an SSB or CSI-RS and the SRS is configured, the UE may transmit the SRS resource by using a spatial domain filter (spatial domain transmission filter) the same as a spatial domain filter (spatial domain reception filter) for receiving the SSB or CSI-RS. In this case, the UE may assume that a UE receive beam of the SSB or CSI-RS and a UE transmit beam of the SRS are the same.

In a case that, for a given SRS (target SRS) resource, spatial relation information related to another SRS (reference SRS) and the SRS (target SRS) is configured, the UE may transmit the target SRS resource by using a spatial domain filter (spatial domain transmission filter) the same as a spatial domain filter (spatial domain transmission filter) for transmitting the reference SRS. In other words, in this case, the UE may assume that a UE transmit beam of the reference SRS and a UE transmit beam of the target SRS are the same.

The UE may determine, on the basis of a value of a given field (e.g., SRS resource indicator (SRI) field) in DCI (e.g., DCI format 0_1), a spatial relation of a PUSCH scheduled by the DCI. Specifically, the UE may use, for the PUSCH transmission, the spatial relation information of SRS resource (e.g., "spatialRelationInfo" of the RRC information element) determined on the basis of the value (e.g., SRI) of the given field.

In Rel-15/16 NR, in a case that codebook-based transmission is used for a PUSCH, an SRS resource set for codebook usage including SRS resources up to two may be configured for the UE by RRC, and one of the SRS resources up to two may be indicated by DCI (SRI field of one bit). The transmit beam of the PUSCH is to be indicated by the SRI field.

The UE may determine the TPMI and the number of layers (transmitted rank) for the PUSCH on the basis of a precoding information and number of layers field (hereinafter, also referred to as a precoding information field). From a codebook for uplink regarding the number of ports the same as the number of SRS ports indicated by "nrofSRS-Ports" of a higher layer parameter configured for the SRS resource indicated by the SRI field, the UE may select a precoder on the basis of the TPMI, the number of layers, and the like.

In Rel-15/16 NR, in a case that non-codebook-based transmission is used for a PUSCH, an SRS resource set for noncodebook usage including SRS resources up to four may be configured for the UE by RRC, and one or more of the SRS resources up to four may be indicated by DCI (SRI field of two bits).

The UE may determine the number of layers (transmitted rank) for the PUSCH on the basis of the SRI field. For example, the UE may determine that the number of SRS resources indicated by the SRI field is the same as the number of layers for the PUSCH. The UE may calculate the precoder of the SRS resource.

In a case that a CSI-RS (which may be referred to as an associated CSI-RS) associated with the SRS resource (or an SRS resource set that the SRS resource belongs to) is configured by a higher layer, the transmit beam of the PUSCH may be calculated on the basis of (measurement of) the configured associated CSI-RS. Otherwise, the transmit beam of the PUSCH may be indicated by the SRI.

Note that whether to use codebook-based PUSCH transmission or non-codebook-based PUSCH transmission may be configured, for the UE, by a higher layer parameter "txConfig" indicating a transmission scheme. The parameter may indicate a value of "codebook" or "noncodebook".

In the present disclosure, the codebook-based PUSCH (codebook-based PUSCH transmission, codebook-based transmission) may mean a PUSCH in a case that "codebook" is configured for the UE as the transmission scheme. In the present disclosure, the non-codebook-based PUSCH (non-codebook-based PUSCH transmission, non-codebook-based transmission) may mean a PUSCH in a case that "noncodebook" is configured for the UE as the transmission scheme.

(High Rank Transmission)

In Rel-15 NR, uplink (UL) Multi Input Multi Output (MIMO) transmission with up to four layers is supported. For NR in the future, in order to achieve higher spectrum efficiency, supporting UL transmission with the number of layers more than four is under study.

However, regarding the UL transmission with the number of layers more than four, the study is not yet progressed on how a network grasps an antenna configuration of a UE and how to cause the UE to perform the UL transmission. Unless control for such operation is clarified, an increase in the communication throughput may be suppressed.

In view of this, the inventors of the present invention came up with the idea of a method for appropriately performing the UL transmission with the number of layers more than four.

Embodiments according to the present disclosure will be described in detail with reference to the drawings as follows. The radio communication methods according to respective embodiments may each be employed individually, or may be employed in combination. Note that the embodiments of the present disclosure may be also used in a case that a UL TCI state is not introduced.

Note that, in the present disclosure, "A/B" may mean "at least one of A and B."

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

In the present disclosure, activate, deactivate, indicate, select, configure, update, determine, and the like may be interchangeably interpreted.

In the present disclosure, a panel, a beam, a panel group, a beam group, an Uplink (UL) transmission entity, a TRP, spatial relation information (SRI), a spatial relation, a control resource set (CORESET), a Physical Downlink Shared Channel (PDSCH), a codeword, a base station, a given antenna port (for example, a demodulation reference signal (DMRS) port), a given antenna port group (for example, a DMRS port group), a given group (for example, a code division multiplexing (CDM) group, a given reference signal group, or a CORESET group), a given resource (for example, a given reference signal resource), a given resource set (for example, a given reference signal resource set), a CORESET pool, a PUCCH group (PUCCH resource group), a spatial relation group, a downlink TCI state (DL TCI state), an uplink TCI state (UL TCI state), a unified TCI state, a QCL, and the like may be interchangeably interpreted.

A spatial relation information Identifier (ID) (TCI state ID) and spatial relation information (TCI state) may be interchangeably interpreted. The "spatial relation information" may be interchangeably interpreted as "a set of pieces of spatial relation information", "one or more pieces of spatial relation information", or the like. The TCI state and the TCI may be interchangeably interpreted.

In the present disclosure, an index, an ID, an indicator, and a resource ID may be interchangeably interpreted. In the present disclosure, a sequence, a list, a set, a group, a cluster, a subset, and the like may be interchangeably interpreted.

In the following description of embodiments, "spatial relation information (SRI)", "spatial relation information for PUSCH", "spatial relation", "UL beam", "transmit beam of UE", "UL TCI", "UL TCI state", "spatial relation of UL TCI state", an SRS resource indicator (SRI), an SRS resource, a precoder, and the like may be interchangeably interpreted.

(Radio Communication Method)

<First Embodiment>

A first embodiment relates to a transmission antenna configuration of a UE to support the number of layers more than four.

The UE may report, to a network, UE capability information indicating that transmission with the number of antenna ports more than four is supported. The UE capability information may be referred to as UE capability information related to transmission antenna configuration. The UE capability information related to transmission antenna configuration may include information related to the number of transmission antenna ports (e.g., six, eight, or the like) supported by the UE, and may include information related to the maximum number of layers for the codebook-based PUSCH/non-codebook-based PUSCH supported by the UE.

The information related to the maximum number of layers for the codebook-based PUSCH and the information related to the maximum number of layers for the non-codebook-based PUSCH may be indicated by, for example, RRC parameters "maxNumberMIMO-LayersCB-PUSCH" and "maxNumberMIMO-LayersNonCB-PUSCH", respectively. Note that a suffix (e.g., "r_18") and the like indicating a specific release may be added to any parameter names in the present disclosure.

The UE may report, to the network, UE capability information related to antenna coherency. The UE capability information related to antenna coherency may be included in the UE capability information related to transmission antenna configuration or may be included in other UE capability information. The UE capability information related to antenna coherency may be indicated by, for example, an RRC parameter "pusch-TransCoherence".

The UE capability information related to antenna coherency may include information related to at least one of antenna assumption and a codebook subset.

For example, the UE capability information related to antenna coherency may be indicated by "fully and partial and noncoherent (fullyAndPartialAndNonCoherent)", "partial and noncoherent (partialAndNonCoherent)", "noncoherent (NonCoherent)", and the like.

The UE capability information related to antenna coherency may indicate a combination of coherent antennas, the number of ports included in the combination, or the number of the combinations. For example, the UE supporting transmission with six antenna ports may report "(X1, X2, X3)", as the UE capability information related to antenna coherency.

Here, $Xi$ (i is an integer) indicates the number of antenna ports included in a combination including one or more coherent antenna ports. $Xi$ may take a value equal to 0 or more and equal to the maximum number of antenna ports or less. $\Sigma_i Xi$ may correspond to the maximum number of antenna ports supported by the UE.

$Xi$ (i is an integer) may indicate the number of ports included in one frame, and in this case, the UE capability information related to antenna coherency may indicate the number of ports included in each frame. Note that the frame is a unit obtained by grouping antenna ports as a group/combination, and may be interpreted as a panel, a panel group, an antenna group, an antenna port group, an antenna port set, a beam group, and the like.

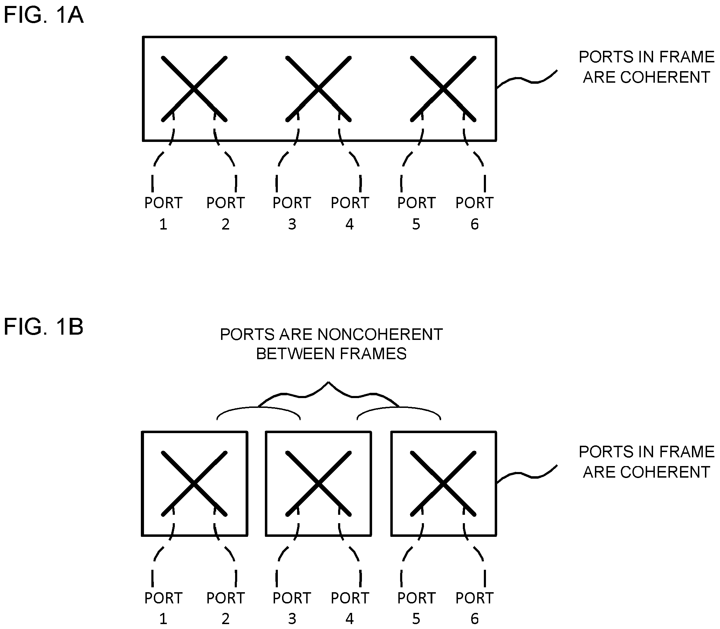

FIGS. 1A and 1B are each a diagram to show an example of the UE capability information related to antenna coherency according to the first embodiment. In each example, a case is described in which the UE supports transmission with six antenna ports.

FIG. 1A corresponds to a transmission antenna configuration in which all antenna ports are coherent in a frame. In FIG. 1A, six antenna ports (ports 1 to 6) are all coherent, and thus the UE may report (X1, X2, X3) = (6, 0, 0).

FIG. 1B corresponds to a transmission antenna configuration including three combinations (frames), each of the frames including a combination of two antenna ports coherent. Antenna ports are noncoherent between the respective different frames. In this case, the UE may report (X1, X2, X3) = (2, 2, 2).

The UE supporting transmission with eight antenna ports may report "(X1, X2, X3, X4)", as the UE capability information related to antenna coherency. In a case that the eight antenna ports are all coherent, the UE may report (X1, X2, X3, X4) = (8, 0, 0, 0).

(X1, X2, X3, X4) = (4, 4, 0, 0) may indicate a transmission antenna configuration including two frames, each of the frames including a combination of four antenna ports coherent, antenna ports being noncoherent between the respective different frames.

(X1, X2, X3, X4) = (2, 2, 2, 2) may indicate a transmission antenna configuration including four frames, each of the frames including a combination of two antenna ports coherent, antenna ports being noncoherent between the respective different frames.

Note that at least one Xi to be reported may be omitted. For example, the UE having the antenna configuration of (X1, X2, X3, X4) = (2, 2, 2, 2) may report (X1, X2, X3) = (2, 2, 2), as the UE capability information related to antenna coherency. A base station receiving the UE capability information, when understanding that the UE supports eight antenna ports based on the UE capability information related to transmission antenna configuration, for example, may derive X4 = 8 - (X1 + X2 + X3) = 2. Thus, with at least one Xi omitted in reporting, an increase in the communication overhead of the UE capability information can be suppressed.

Note that an array including Xi described above may be referred to as antenna coherency information, antenna coherency type, and the like.

The UE supporting transmission with the number of antenna ports more than four may support the number of UL layers more than four. For example, the UE (which may be referred to as 6TX UE) supporting six transmission antenna ports may support up to a specific number (e.g., four/five/six) of layers for UL. For example, the UE (which may be referred to as 8TX UE) supporting eight transmission antenna ports may support up to a specific number (e.g., four/five/six/seven/eight) of layers for UL.

The 6TX UE may use a table of precoding matrix of the specific number (e.g., one/two/three/four/five/six)-layer transmission using six antenna ports, as a table of precoding matrix in a case that the transform precoder is disabled.

The 6TX UE may use a table of precoding matrix of at least one-layer transmission using six antenna ports, as a table of precoding matrix in a case that the transform precoder is enabled. The 6TX UE may use a table of precoding matrix of two-layer transmission using six antenna ports, as a table of precoding matrix in a case that the transform precoder is enabled.

The 8TX UE may use a table of precoding matrix of the specific number (e.g., one/two/three/four/five/six/seven/eight)-layer transmission using eight antenna ports, as a table of precoding matrix in a case that the transform precoder is disabled.

The 8TX UE may use a table of precoding matrix of at least one-layer transmission using eight antenna ports, as a table of precoding matrix in a case that the transform precoder is enabled. The 8TX UE may use a table of precoding matrix of two-layer transmission using eight antenna ports, as a table of precoding matrix in a case that the transform precoder is enabled.

Note that the precoding matrix in the present disclosure may correspond to a TPMI index. The table (which may be referred to as codebook) of precoding matrix may be different for each antenna coherency type.

The UE (e.g., 6TX UE, 8TX UE) supporting transmission with the number of antenna ports more than four may report UE capability information indicating the maximum number of layers of the UL transmission supported.

The UE may report UE capability information indicating whether to support two-layer UL transmission in a case that the transform precoder is enabled.

According to the first embodiment described above, the transmission antenna configuration of the UE to support the number of layers more than four can be appropriately reported to the network.

<Second Embodiment>

A second embodiment relates to PUSCH transmission of a UE (e.g., 6TX UE, 8TX UE) supporting the number of layers more than four.

A PUSCH of the number of layers more than four may be transmitted using a transport block (TB)/codeword (Code Word, CW). DCI (e.g., DCI format 0_1/0_2) for scheduling the PUSCH may include at least one field having a size larger than a bit size of an existing DCI field, from among the following fields:

- SRS resource indicator field;
- Precoding information field.

Note that the size of the SRS resource indicator field increases in a case of non-codebook-based PUSCH, but need not increase (in other words, may be one bit) in a case of codebook-based PUSCH. In a case of codebook-based PUSCH with no increase in the number of SRS resources in an SRS resource set (e.g., the number of SRS resources configured for the SRS resource set is two), it is sufficient that one SRI is indicated for the PUSCH, because the number of bits for the SRI needs not be increased.

In the precoding information field, a new table of precoding and the number of layers for six/eight antenna ports may be defined. The table may be associated with the table of precoding matrix.

Note that a size of an antenna port ('Antenna ports') field of the DCI needs not be increased. For DMRS port indication of the number of layers more than four, a new table of antenna ports may be defined. This will be described in a fourth embodiment.

The DCI may include two sets of fields including a modulation and coding scheme (MCS) field, a new data indicator (NDI) field, and a redundancy version (RV) field. Each one of the two sets may correspond to one TB. In other words, the DCI including the two sets may schedule two TBs for the UE.

According to the second embodiment described above, the PUSCH transmission using the number of layers more than four can be appropriately controlled.

<Third Embodiment>

A third embodiment relates to the SRS resource indicator field increased in size, described in the second embodiment.

Depending on the number of SRS resources in one SRS resource set configured for the UE, for up to six or eight layers, the third embodiment are roughly divided into the following embodiments:

- Embodiment 3.1: a case where up to six or eight one-port SRS resources are configured in one SRS resource set;
- Embodiment 3.2: a case where up to three or four one-port SRS resources are configured in one SRS resource set.

Note that, as described above, the SRS resource set in the third embodiment may be an SRS resource set for noncodebook usage and the PUSCH may be non-codebook-based PUSCH.

[Embodiment 3.1]

After the SRS transmission by the UE, the base station may indicate, using DCI, up to six or eight SRS resources to the UE. The size of the SRS resource indicator field included in the DCI may be represented by the following expression 1.

[Math. 1]

$$\left\lceil \log_2 \left( \sum_{k=l}^{min\{L_{max}, N_{SRS}\}} \binom{N_{SRS}}{k} \right) \right\rceil$$

Here, $N_{SRS}$ may be the number of SRS resources configured in the SRS resource set for noncodebook usage, and $L_{max}$ may be given by a higher layer parameter (e.g., RRC parameter "maxMIMO-Layers") indicating the maximum MIMO layer to be used for the PUSCH or may be given by the maximum number of layers for the PUSCH supported by the UE for non-codebook-based operation.

Expression 1 itself also applies in Rel-15 NR. Each of $N_{SRS}$, $L_{max}$, and the like is a value equal to four or less in Rel-15 NR, whereas in Embodiment 3.1, each of $N_{SRS}$, $L_{max}$, and the like may be six or eight, and thus the SRS resource indicator field is increased in size than that in Rel-15 NR.

[Embodiment 3.2]

In Embodiment 3.2, two SRS resource sets may be configured for the UE, and each of the two SRS resource sets may include up to three or four one-port SRS resources.

In Embodiment 3.2, the UE may receive DCI including two SRS resource indicator fields. In a case that "two SRS resources for noncodebook base" is configured, the UE may assume that the DCI includes two SRS resource indicator fields.

After the SRS transmission by the UE, the base station may indicate, to the UE, up to three or four SRS resources for each of the SRS resource indicator fields of the DCI. At least one of the SRS resource indicator fields may correspond to one TB.

For the PUSCH transmission with a specific number (e.g., four) of layers or less, one SRS resource indicator field may indicate up to four SRS resources, and the other SRS resource indicator field may indicate no SRS resources.

For the PUSCH transmission with the number of layers more than a specific number (e.g., four) of layers, SRS resources indicated by each SRS resource indicator field may be under a given restriction. For example, the number of SRS resources that may be indicated by the two SRS resource indicator fields may be at least one of (3 + 2), (2 + 3), (3 + 3), (3 + 4), (4 + 3), (4 + 4), and the like.

Note that, in the present disclosure, an expression "X+Y layer" (X and Y are numerals) may mean an X+Y layer transmission based on indication of X+Y SRS resources using the two SRS resource indicator fields described in Embodiment 3.2.

According to the third embodiment described above, the SRI can be appropriately indicated for the non-codebook-based PUSCH using the number of layers more than four.

<Fourth Embodiment>

A fourth embodiment relates to a table of antenna ports for DMRS port indication of the number of layers more than four in a case that the transform precoder is disabled.

For codebook-based PUSCH, the UE determines a rank (the number of layers) for the PUSCH transmission on the basis of the precoding information field of the DCI. For non-codebook-based PUSCH, the UE determines the rank (the number of layers) for the PUSCH transmission on the basis of the SRS resource indicator fields of the DCI.

Then, on the basis of values of enablement/disablement of the transform precoder, the DMRS type of PUSCH that is configured by a higher layer signaling (or that may be configured by an RRC parameter "dmrs-Type"), and the maximum length of DMRS (which may be configured by an RRC parameter "maxLength"), the UE may determine the table of antenna ports corresponding to the rank determined.

In accordance with a value of the antenna port field of the DCI, an entry in the table to be referenced may be determined (the entry corresponds to a set of the number of CDM groups, a DMRS antenna port index, the number of front-load symbols, and the like).

[Case of DMRS Type = 1, Maximum Length of DMRS = 1]

In a case that the DMRS type = 1 and the maximum length of DMRS = 1, transmission up to rank 4 may be supported. In other words, the UE configured with the DMRS type = 1 and the maximum length of DMRS = 1 does not support transmission more than rank 4.

[Case of DMRS Type = 1, Maximum Length of DMRS = 2]

In a case that the DMRS type = 1 and the maximum length of DMRS = 2, transmission up to rank 8 may be supported.

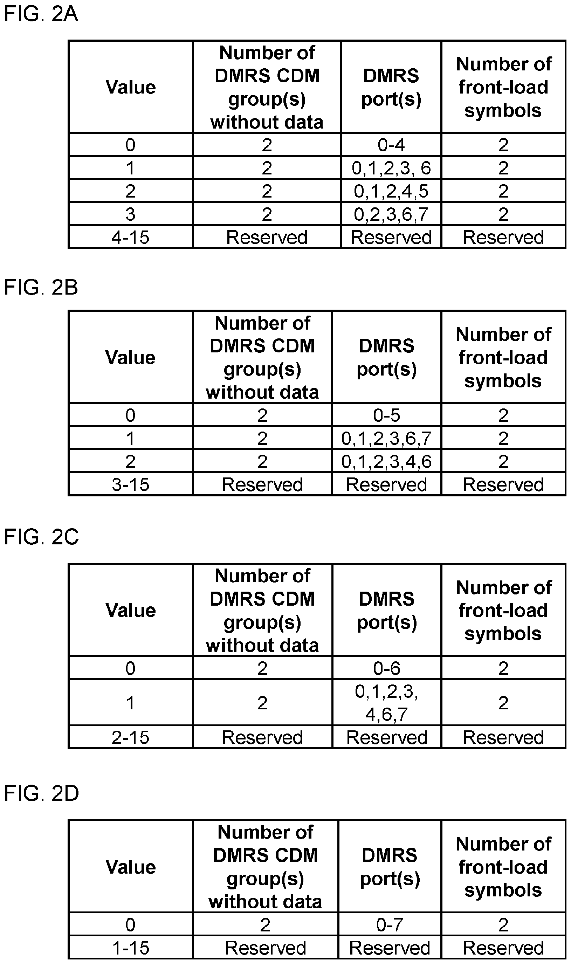

FIGS. 2A to 2D are each a diagram to show an example of a table of antenna ports to be referenced in a case that the transform precoder is disabled, the DMRS type = 1, and the maximum length of DMRS = 2, in the fourth embodiment.

FIG. 2A illustrates an example of a table of antenna ports corresponding to rank 5. In the example, each of the antenna port field values = 0 to 3 is associated with a respective one of different sets (the number of antenna ports being five) of DMRS ports. Note that the relationship between each of the values and the content of entry is not limited to this. This applies to other examples.

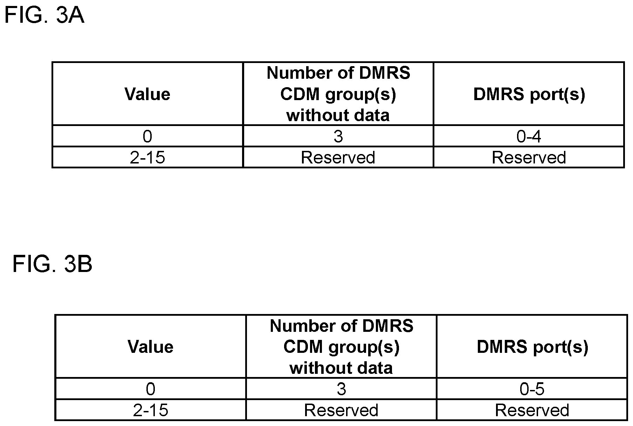

In FIG. 2A, 2+3 layer and 3+2 layer may be supported. Note that only a part of the entry illustrated may be supported. For example, only the entry of DMRS ports 0 to 4 may be supported for 2+3 layer, and only the entry of DMRS ports 0, 1, 2, 3, 6 may be supported for 3+2 layer.

FIG. 2B illustrates an example of a table of antenna ports corresponding to rank 6. In the example, each of the antenna port field values = 0 to 2 is associated with a respective one of different sets (the number of antenna ports being six) of DMRS ports.

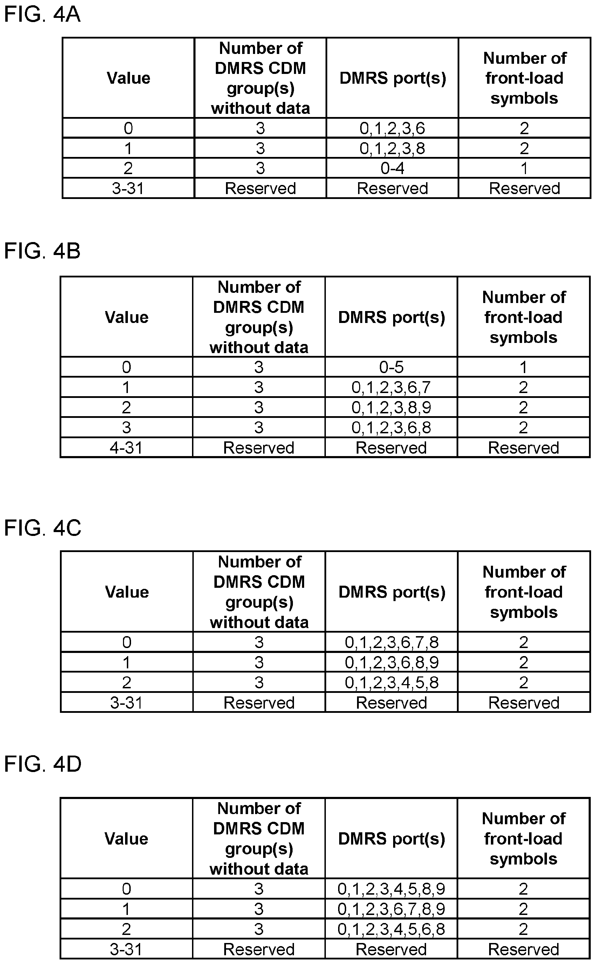

In FIG. 2B, 4+2 layer, 2+4 layer, and 3+3 layer may be supported. Note that, for X+Y layer, only a specific combination of X and Y (e.g., 3+3) may be supported.

FIG. 2C is an example of a table of antenna ports corresponding to rank 7. In the example, each of the antenna port field values = 0 to 1 is associated with a respective one of different sets (the number of antenna ports being seven) of DMRS ports.

In FIG. 2C, 4+3 layer and 3+4 layer may be supported.

FIG. 2D is an example of a table of antenna ports corresponding to rank 8. In the example, the antenna port field value = 0 is associated with a set (the number of antenna ports being eight) of DMRS ports.

In FIG. 2D, only 4+4 layer may be supported.

[Case of DMRS Type = 2, Maximum Length of DMRS = 1]

In a case that the DMRS type = 2 and the maximum length of DMRS = 1, transmission up to rank 6 may be supported, only transmission up to rank 4 may be supported, or transmission of rank 6 (e.g., 4+2 layer) may not be supported but only transmission up to rank 5 may be supported.

FIGS. 3A and 3B are each a diagram to show an example of a table of antenna ports to be referenced in a case that the transform precoder is disabled, the DMRS type = 2, and the maximum length of DMRS = 1, in the fourth embodiment.

FIG. 3A illustrates an example of a table of antenna ports corresponding to rank 5. In the example, the antenna port field value = 0 is associated with a set (the number of antenna ports being five) of DMRS ports.

FIG. 3B illustrates an example of a table of antenna ports corresponding to rank 6. In the example, the antenna port field value = 0 is associated with a set (the number of antenna ports being six) of DMRS ports.

[Case of DMRS Type = 2, Maximum Length of DMRS = 2]

In a case that the DMRS type = 2 and the maximum length of DMRS = 2, transmission up to rank 8 may be supported.

FIGS. 4A to 4D are each a diagram to show an example of a table of antenna ports to be referenced in a case that the transform precoder is disabled, the DMRS type = 2, and the maximum length of DMRS = 2, in the fourth embodiment.

FIG. 4A illustrates an example of a table of antenna ports corresponding to rank 5. In the example, each of the antenna port field values = 0 to 2 is associated with a respective one of different sets (the number of antenna ports being five) of DMRS ports.

FIG. 4B illustrates an example of a table of antenna ports corresponding to rank 6. In the example, each of the antenna port field values = 0 to 3 is associated with a respective one of different sets (the number of antenna ports being six) of DMRS ports.

In FIG. 4B, 4+2 layer, 2+4 layer, and 3+3 layer may be supported. Note that, for X+Y layer, only a specific combination of X and Y (e.g., 3+3) may be supported. For example, only the entry corresponding to the antenna port field value = 3 in FIG. 4B may be supported for 3+3.

FIG. 4C illustrates an example of a table of antenna ports corresponding to rank 7. In the example, each of the antenna port field values = 0 to 2 is associated with a respective one of different sets (the number of antenna ports being seven) of DMRS ports.

FIG. 4D illustrates an example of a table of antenna ports corresponding to rank 8. In the example, each of the antenna port field values = 0 to 2 is associated with a set (the number of antenna ports being eight) of DMRS ports.

In FIG. 4D, only the entry corresponding to 4+4 layer may be supported.

According to the fourth embodiment described above, the antenna port can be appropriately indicated for the PUSCH using the number of layers more than four in a case that the transform precoder is disabled.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

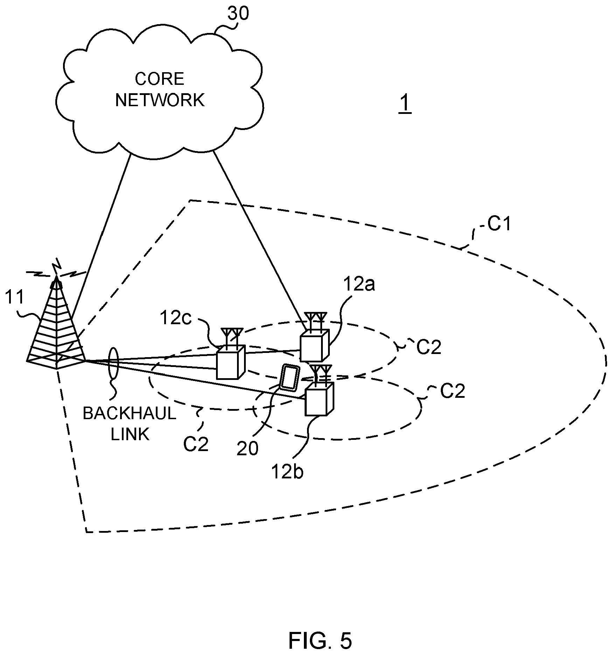

FIG. 5 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

(Base Station)

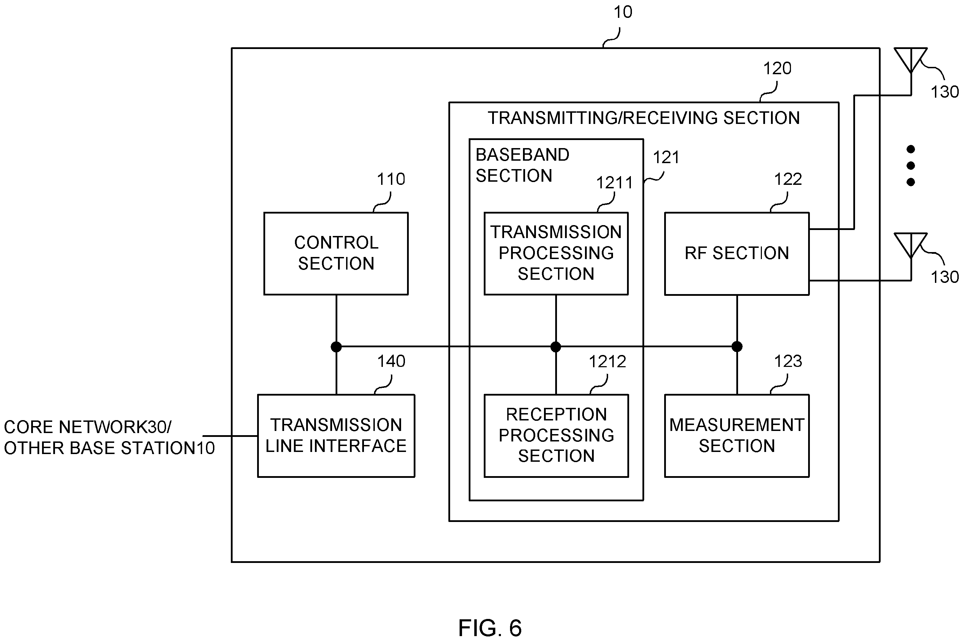

FIG. 6 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive, from the user terminal 20, capability information indicating that transmission with the number of antenna ports more than four is supported.

The control section 110 may control uplink transmission using the number of layers more than four for the user terminal 20.

(User Terminal)

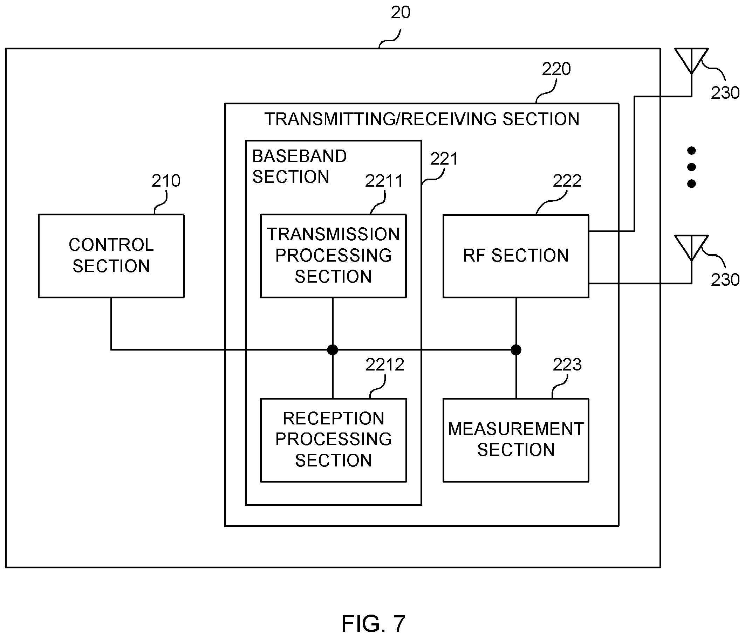

FIG. 7 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that whether to apply DFT processing may be based on the configuration of the transform precoder. The transmitting/receiving section 220 (transmission processing section 2211) may perform, for a given channel (for example, PUSCH), the DFT processing as the above-described transmission processing to transmit the channel by using a DFT-s-OFDM waveform if transform precoder is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit capability information (UE capability information) indicating that transmission with the number of antenna ports more than four is supported. The control section 210 may control uplink transmission (e.g., PUSCH) using the number of layers more than four.

The capability information may indicate the number of ports included in a combination of coherent antennas (or a set of such the number of ports).

In a case that two sounding reference signal (SRS) resource sets for noncodebook usage are configured and that one-port SRS resources up to three or four are configured for each of the two SRS resource sets, the control section 210 may control the uplink transmission on the basis of downlink control information (DCI) including two SRS resource indicator (SRI) fields.

In a case that at least one of a demodulation reference signal (DMRS) type and a maximum length of DMRS to be configured is not one (e.g., the DMRS type = 1 and the maximum length of DMRS = 2), the control section 210 may control the uplink transmission.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

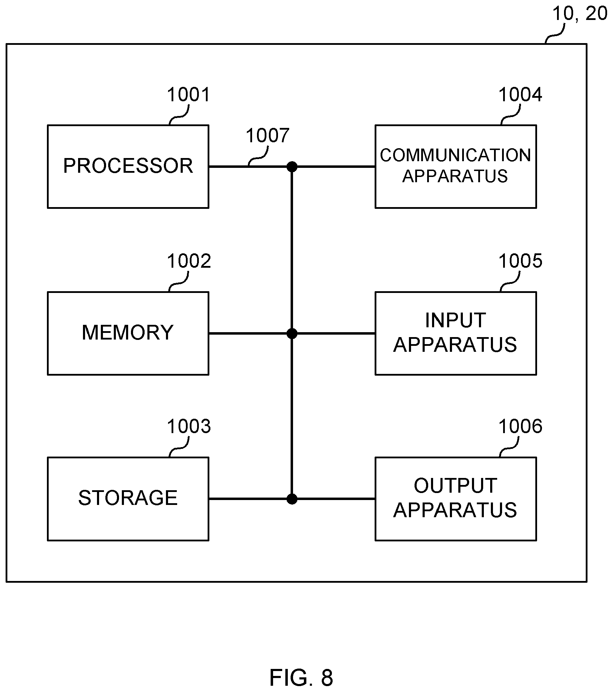

For example, a base station, a user terminal, and so on according to one embodiment of the present disclosure may function as a computer that executes the processes of the radio communication method of the present disclosure. FIG. 8 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given channel/signal outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notifying of information is by no means limited to the aspects/embodiments described in the present disclosure, and other methods may be used as well. For example, notifying of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notifying of given information (for example, notifying of "being X") does not necessarily have to be notified explicitly, and can be notified implicitly (by, for example, not notifying this given information or notifying another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, instructions, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a transmitting section that transmits capability information indicating that transmission with the number of antenna ports more than four is supported; and
   a control section that controls uplink transmission using the number of layers more than four.

2. The terminal according to claim 1, wherein
   the capability information indicates the number of ports included in a combination of coherent antennas.

3. The terminal according to claim 1 or 2, wherein
   in a case that two sounding reference signal (SRS) resource sets for noncodebook usage are configured and that one-port SRS resources up to three or four are configured for each of the two SRS resource sets, the control section controls the uplink transmission on the basis of downlink control information including two SRS resource indicator fields.

4. The terminal according to any one of claims 1 to 3, wherein
   in a case that at least one of a demodulation reference signal (DMRS) type and a maximum length of DMRS to be configured is not one, the control section controls the uplink transmission.

5. A radio communication method in a terminal, the radio communication method comprising:

   transmitting capability information indicating that transmission with the number of antenna ports more than four is supported; and
   controlling uplink transmission using the number of layers more than four.

6. A base station comprising:

   a receiving section that receives, from a terminal, capability information indicating that transmission with the number of antenna ports more than four is supported; and
   a control section that controls, for the terminal, uplink transmission using the number of layers more than four.

FIG. 1A

PORTS IN FRAME
ARE COHERENT

PORT 1   PORT 2   PORT 3   PORT 4   PORT 5   PORT 6

FIG. 1B

PORTS ARE NONCOHERENT
BETWEEN FRAMES

PORTS IN FRAME
ARE COHERENT

PORT 1   PORT 2   PORT 3   PORT 4   PORT 5   PORT 6

FIG. 2A

| Value | Number of DMRS CDM group(s) without data | DMRS port(s) | Number of front-load symbols |
|---|---|---|---|
| 0 | 2 | 0-4 | 2 |
| 1 | 2 | 0,1,2,3, 6 | 2 |
| 2 | 2 | 0,1,2,4,5 | 2 |
| 3 | 2 | 0,2,3,6,7 | 2 |
| 4-15 | Reserved | Reserved | Reserved |

FIG. 2B

| Value | Number of DMRS CDM group(s) without data | DMRS port(s) | Number of front-load symbols |
|---|---|---|---|
| 0 | 2 | 0-5 | 2 |
| 1 | 2 | 0,1,2,3,6,7 | 2 |
| 2 | 2 | 0,1,2,3,4,6 | 2 |
| 3-15 | Reserved | Reserved | Reserved |

FIG. 2C

| Value | Number of DMRS CDM group(s) without data | DMRS port(s) | Number of front-load symbols |
|---|---|---|---|
| 0 | 2 | 0-6 | 2 |
| 1 | 2 | 0,1,2,3, 4,6,7 | 2 |
| 2-15 | Reserved | Reserved | Reserved |

FIG. 2D

| Value | Number of DMRS CDM group(s) without data | DMRS port(s) | Number of front-load symbols |
|---|---|---|---|
| 0 | 2 | 0-7 | 2 |
| 1-15 | Reserved | Reserved | Reserved |

FIG. 3A

| Value | Number of DMRS CDM group(s) without data | DMRS port(s) |
|---|---|---|
| 0 | 3 | 0-4 |
| 2-15 | Reserved | Reserved |

FIG. 3B

| Value | Number of DMRS CDM group(s) without data | DMRS port(s) |
|---|---|---|
| 0 | 3 | 0-5 |
| 2-15 | Reserved | Reserved |

## FIG. 4A

| Value | Number of DMRS CDM group(s) without data | DMRS port(s) | Number of front-load symbols |
|---|---|---|---|
| 0 | 3 | 0,1,2,3,6 | 2 |
| 1 | 3 | 0,1,2,3,8 | 2 |
| 2 | 3 | 0-4 | 1 |
| 3-31 | Reserved | Reserved | Reserved |

## FIG. 4B

| Value | Number of DMRS CDM group(s) without data | DMRS port(s) | Number of front-load symbols |
|---|---|---|---|
| 0 | 3 | 0-5 | 1 |
| 1 | 3 | 0,1,2,3,6,7 | 2 |
| 2 | 3 | 0,1,2,3,8,9 | 2 |
| 3 | 3 | 0,1,2,3,6,8 | 2 |
| 4-31 | Reserved | Reserved | Reserved |

## FIG. 4C

| Value | Number of DMRS CDM group(s) without data | DMRS port(s) | Number of front-load symbols |
|---|---|---|---|
| 0 | 3 | 0,1,2,3,6,7,8 | 2 |
| 1 | 3 | 0,1,2,3,6,8,9 | 2 |
| 2 | 3 | 0,1,2,3,4,5,8 | 2 |
| 3-31 | Reserved | Reserved | Reserved |

## FIG. 4D

| Value | Number of DMRS CDM group(s) without data | DMRS port(s) | Number of front-load symbols |
|---|---|---|---|
| 0 | 3 | 0,1,2,3,4,5,8,9 | 2 |
| 1 | 3 | 0,1,2,3,6,7,8,9 | 2 |
| 2 | 3 | 0,1,2,3,4,5,6,8 | 2 |
| 3-31 | Reserved | Reserved | Reserved |

FIG. 5

EP 4 280 643 A1

FIG. 6

FIG. 7

10, 20

1001

PROCESSOR

1007

COMMUNICATION
APPARATUS

1004

1002

MEMORY

INPUT
APPARATUS

1005

1003

STORAGE

OUTPUT
APPARATUS

1006

FIG. 8

<table>
<tr><td colspan="2" align="center"><strong>INTERNATIONAL SEARCH REPORT</strong></td><td colspan="2">International application No.<br>PCT/JP2021/000837</td></tr>
</table>

| A. CLASSIFICATION OF SUBJECT MATTER |
| --- |
| Int. Cl. H04W8/22(2009.01)i, H04W16/28(2009.01)i<br>FI: H04W8/22, H04W16/28 |
| According to International Patent Classification (IPC) or to both national classification and IPC |

| B. FIELDS SEARCHED |
| --- |
| Minimum documentation searched (classification system followed by classification symbols)<br>Int. Cl. H04W8/22, H04W16/28 |

Documentation searched other than minimum documentation to the extent that such documents are included in the fields searched
```
Published examined utility model applications of Japan      1922-1996
Published unexamined utility model applications of Japan    1971-2021
Registered utility model specifications of Japan            1996-2021
Published registered utility model applications of Japan    1994-2021
```

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y<br>A | US 2020/0412421 A1 (ZTE CORPORATION) 31 December 2020 (2020-12-31), paragraphs [0044], [0047], [0050], [0054] (Family: none) | 1-2, 5-6<br>4<br>3 |
| Y | Lenovo, Motorola Mobility. Discussion of multi-TRP/panel transmission[online], 3GPP TSG RAN WG1#98, 30 August 2019, R1-1908720, retrieved on [06 July 2021], Internet <URL: https://www.3gpp.org/ftp/tsg_ran/WG1_RL1/TSGR1_98/Docs/R1-1908720.zip> section 2.4.1 | 4 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06.07.2021 | Date of mailing of the international search report<br>13.07.2021 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

| | **INTERNATIONAL SEARCH REPORT** | International application No. |
|---|---|---|
| | | PCT/JP2021/000837 |

C (Continuation).    DOCUMENTS CONSIDERED TO BE RELEVANT

| Category* | Citation of document, with indication, where appropriate, of the relevant passages | Relevant to claim No. |
|---|---|---|
| A | CATT. Remaining issues on non-codebook based UL transmission[online], 3GPP TSG RAN WG1 #93, 25 May 2018, R1-1806277, retrieved on [06 July 2021], Internet <URL: http://www.3gpp.org/ftp/tsg_ran/WG1_RL1/TSGR1_93/Docs/R1-1806277.zip> section 2.2 | 3 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010